# EUROPÄISCHE PATENTSCHRIFT

(11) **EP 3 141 979 B1**
(45) Veröffentlichungstag und Bekanntmachung des Hinweises auf die Patenterteilung: **02.03.2022**
(21) Anmeldenummer: 15184636.7
(22) Anmeldetag: 10.09.2015
(51) Int. Cl.: G06F 1/16, G06F 1/18

(54) **SCHNITTSTELLENMODUL MIT ABSCHIRMUNG FÜR EINEN COMPUTER**
INTERFACE MODULE HAVING SHIELD FOR A COMPUTER
MODULE D'INTERFACE DOTE DE BLINDAGE POUR UN ORDINATEUR

(43) Veröffentlichungstag der Anmeldung: 15.03.2017
(73) Patentinhaber: Siemens Aktiengesellschaft, 80333 München (DE)
(72) Erfinder: Engert, Stefan, 90763 Fürth (DE); Kroiß, Sebastian, 92318 Neumarkt (DE)

(56) Entgegenhaltungen:
- EP-A1- 0 671 874
- EP-A1- 1 420 328
- DE-A1- 10 064 969
- DE-T2- 69 611 834
- US-A1- 2006 288 139

## Beschreibung

Die Erfindung betrifft ein einen Computer, insbesondere für einen All-In-One-Arbeitsplatzrechner mit einem Schnittstellenmodul.

Schnittstellenmodule kommen beispielsweise bei einer Verbindung einer Computerhauptplatine mit einem Bedienteil zum Einsatz. Für spezielle sicherheitsrelevante Anwendungen muss dabei die Abhörsicherheit eines derartigen Arbeitsplatz-Computers beispielsweise gemäß Zonenmodell Zone 1 gewährleistet sein. Hierbei werden beispielsweise sogenannte Durchführungsfilter an der Grenzzone zwischen den verschiedenen Zonen, beispielsweise dem Rechnerinneren und einer sogenannten Außenzone angebracht. Derartige Durchführungsfilter bedeuten jedoch einen relativ hohen Aufwand und somit Kosten.

Aus der US 2006/288139 A1 ist ein Computersystem mit einem Computerhauptkörper, der mit einer Vielzahl von Hauptkörper-Eingangsausgangsanschlüssen versehen ist, sowie mit einem Monitorhauptkörper, mit einem Konsolenständer mit einem Konsolengehäuse mit einem Aufnahmeraum im Inneren und zum Stützen des Monitorhauptkörpers bekannt. Das Computersystem umfasst weiter Konsoleneingangsanschlüsse außerhalb des Konsolengehäuses, die mit einem externen Gerät, einem integrierten Port außerhalb des Konsolengehäuses und einem Steuermodul verbindbar sind.

Die EP 0 671 874 A1 betrifft eine Einrichtung zur Abschirmung von auf einer Elektronikkarte angeordneten elektronischen Bauteilen gegen äußere, elektromagnetische Felder mit einem elektromagnetische Felder abschirmenden Gehäuse, das einen elektromagnetische Felder enthaltenden ersten Raum und einen abgeschirmten zweiten Raum bildet.

Der Erfindung liegt die Aufgabe zu Grunde, eine erhöhte und kostengünstige Abhörsicherheit eines Computers zu gewährleisten.

Diese Aufgabe wird durch einen Computer mit den im Anspruch 1 angegebenen Merkmalen gelöst.

Der Computer ist dabei insbesondere als sogenannter All-In-One-Arbeitsplatzrechner geeignet. Das Schnittstellenmodul des Computers weist eine Abschirmleiterplatte auf, die eine Computerhauptplatine mit den Bedienelementen und/oder auch mit externen Schnittstellen verbindet. Die Abschirmleiterplatte ist von einem Abschirmgehäuse umgeben, wobei das Abschirmgehäuse sich untergliedert in die erste Innenzone, durch die der Kabelbaum vom Schnittstellenmodul zum Computer geführt wird und die zweite Innenzone, welche die Abschirmleiterplatte aufnimmt. Hierdurch ergibt sich eine jeweils individuell angepasste Trennung von verschieden stark belasteten EMV-Zonen. Hierdurch entsteht ein spezielles Zonenmodell mit einem extra HF-technisch evakuierten Bedienteil, welches durch entsprechende Befilterung auch an jedes einzelne Nutzsignal angepasst werden kann.

Vorteilhafte Ausgestaltungsformen sind in den Unteransprüchen enthalten.

Eine nochmals verbesserte Abschirmung zum Außenbereich des Computers wird auf vorteilhafte Weise dadurch erreicht, dass die zweite Innenzone zur Kopplung mit einer über die Bedienelemente und/oder die externen Schnittstellen koppelbaren Außenzone vorgesehen ist.

Das Schnittstellenmodul ist als Bedienteil des Computers, insbesondere als Frontkomponente des Computers ausgebildet.

Eine weitere Reduzierung der EMV-Last kann dadurch erzielt werden, dass das Abschirmgehäuse eine evakuierte Zone aufweist, in welcher Filterelemente insbesondere zur Filterung von zwischen der ersten Innenzone und der zweiten Innenzone und/oder der Außenzone über den Kabelbaum übertragenen Signalen angeordnet sind.

Eine weitere Optimierung hinsichtlich EMV-Dichtheit der evakuierten Zone wird dadurch sichergestellt, dass die evakuierte Zone im Randbereich mindestens eine EMV-Dichtung zur Abschirmung der evakuierten Zone aufweist.

Eine gezielte Abschirmung der ersten und zweiten Innenzone und/oder der evakuierten Zone kann in der Weise weiter optimiert werden, dass die Abschirmleiterplatte mindestens eine Signallage aufweist, wobei die Signallage von Schirmlagen zur Abschirmung der Schirmlage gegenüber der ersten Innenzone, der zweiten Innenzone und/oder der evakuierten Zone umgeben sind.

Eine praktische Realisierung für eine Anpassung der Filtereigenschaften exakt an jeweilige Nutzdatensignale kann auf einfach Weise dadurch erfolgen, dass die Filterelemente als Filter dritter Ordnung ausgebildet sind.

Im Folgenden wird die Erfindung anhand der in den Figuren dargestellten Ausführungsbeispiele näher beschrieben und erläutert.

Es zeigen:
- FIG 1: eine schematische Darstellung eines Schnittstellenmoduls,
- FIG 2: eine schematische Darstellung eines All-in-One-Arbeitsplatz-Rechners und
- FIG 3: eine Prinzipdarstellung einer Leiterplatte eines Schnittstellenmoduls.

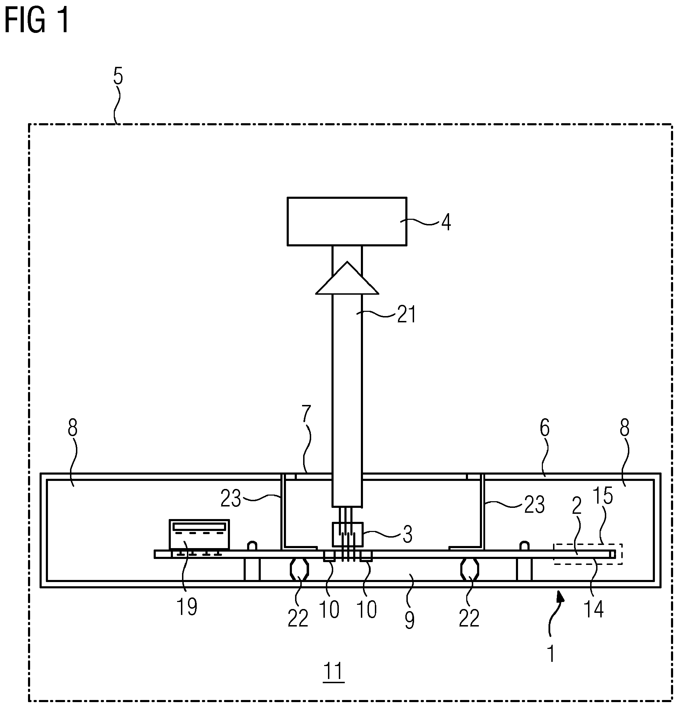

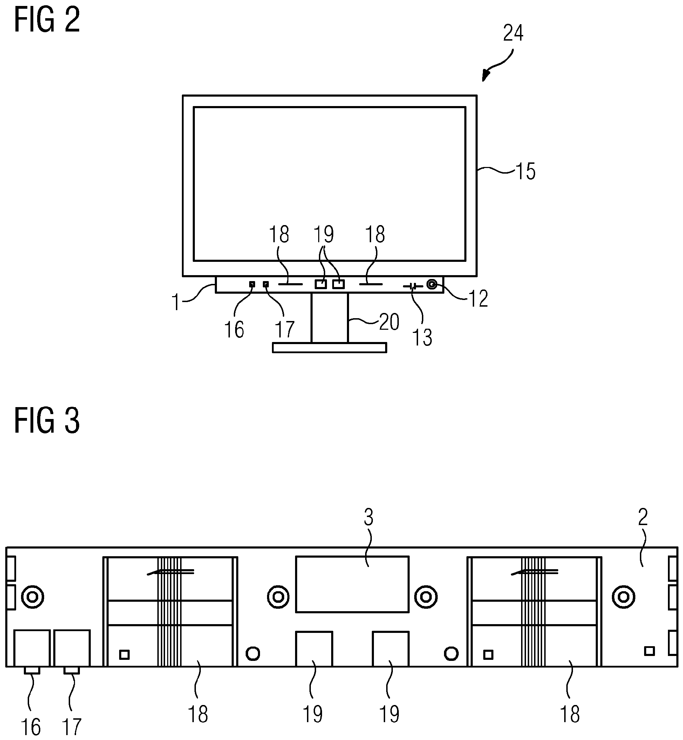

FIG 1 zeigt eine schematische Darstellung eines Schnittstellenmoduls 1. Das Schnittstellenmodul 1 besteht im Wesentlichen aus einer Abschirmleiterplatte 2, die im Innern eines Abschirmgehäuses 6 angeordnet ist. Das Abschirmgehäuse 6 besteht beispielsweise aus Metall, welches die erforderlichen EMV-Eigenschaften aufweist. Auf der Leiterplatte ist ein Steckverbinder 3 angeordnet, der eine Kopplung mit einer Rechnerhauptplatine 4 über einen Kabelbaum 21 ermöglicht. Die Abschirmleiterplatte 2 enthält weiter Schnittstellen und Bedienelemente. Exemplarisch ist bei dem in Fig. 1 dargestellten Ausführungsbeispiel eine USB-Schnittstelle 19 gezeigt, die auf der Abschirmleiterplatte angeordnet ist. Derartige Bedienelemente und Schnittstellen können beispielsweise aber auch ein Mikrophonanschluss, ein Kartenleser, ein Kopfhörer- bzw. Lautsprecheranschluss oder sonstige Regler wie ein Helligkeitsregler sein (vgl. Fig. 2). Diese Elemente sind aus Gründen der Übersichtlichkeit in Fig. 1 nicht näher dargestellt.

Eine gestufte Abschirmung des Schnittstellenmoduls 1 wird dadurch erreicht, dass das Abschirmgehäuse 6 verschiedene Zonen aufweist. So bildet der Raum zwischen dem Steckverbinder 3 zum Anschluss an die Rechnerhauptplatine 4 eine erste Innenzone 7, die zum einen von der Außenwand des Abschirmgehäuses 6 und zum anderen von Winkelelementen 23 gebildet wird. Darüber hinaus umfasst das Abschirmgehäuse 6 eine zweite Innenzone 8 sowie eine evakuierte Zone 9. Die zweite Innenzone dient im wesentlichen der Aufnahme der Abschirmleiterplatte 2, während die evakuierte Zone 9 Filterelemente 10 aufweist insbesondere zur Filterung von zwischen der ersten Innenzone 7 und der zweiten Innenzone 8 und/oder der Außenzone 11 über den Kabelbaum 21 übertragenen Signalen. Die evakuierte Zone 9 weist im Randbereich eine EMV-Dichtung 22 zur Abschirmung der evakuierten Zone 9 auf. Darüber hinaus weist die Abschirmleiterplatte 2 mindestens eine Signallage 14 auf, wobei die Signallage 14 von Schirmlagen 15 zur Abschirmung der Schirmlage 15 gegenüber der ersten Innenzone 7, der zweiten Innenzone 8 und/oder der evakuierten Zone 9 umgeben sind.

Die in Fig. 1 dargestellte grundsätzliche Architektur für ein Schnittstellenmodul 1 für einen abhörsicheren Rechner zeigt somit ein vereinfachtes Aufbaukonzept mit einer verbesserten Filterung von leitungsgebundenen und/oder feldgebundenen kompromittierenden Störsignalen. Hierdurch kommt es zu einer Reduzierung der Aufbaukosten, da teure Filterkomponenten durch diskrete SMD-Bauteile ersetzt werden können.

Figur 2 zeigt eine schematische Darstellung eines All-In-One-Arbeitsplatz-Rechners 24. Ein derartiger All-In-One-Arbeitsplatzrechner 24 weist im Wesentlichen einen Monitor 15 auf, in dessen dem Display abgewandten Seite auch die Rechnerhauptplatine 4 (vgl. Fig. 1) eingebaut ist. Im unteren Bereich des Monitors 15 ist ein Schnittstellenmodul 1 angeordnet, wie es beispielsweise im Zusammenhang mit Figur 1 gezeigt und erläutert ist. Das Schnittstellenmodul 1 weist einen Kopfhöreranschluss 16, einen Mikrophonanschluss 17, Kartenleserschnittestelle 18 sowie USB-Anschlüsse 19, einen Ein-/Aus-Schalter 12 sowie einen Helligkeitsregler 13 auf. Der Monitor 15 sowie das Schnittstellenmodul 1 ruhen auf einem Standfuß 20.

FIG 3 zeigt eine Prinzipdarstellung einer Abschirmleiterplatte 2 eines Schnittstellenmoduls 1, wie sie bereits im Zusammenhang mit Fig. 1 prinzipiell dargestellt und beschrieben ist. Die Abschirmleiterplatte 2 umfasst wiederum, wie bereits im Zusammenhang mit den Figuren 1 und 2 gezeigt und erläutert ist, einen Kopfhöreranschluss 16 sowie einen Mikrophonanschluss 17 auf. Darüber hinaus sind zwei USB-Anschlüsse 19 sowie zwei Kartenlesevorrichtungen 18 vorgesehen. Darüber hinaus trägt die Abschirmleiterplatte 2 einen Steckverbinderanschluss 3 zum Anschluss einer Rechnerhauptplatine, wie dies im Zusammenhang mit Fig. 1 gezeigt und beschrieben ist.

## Patentansprüche

1. Computer (5), insbesondere All-In-One-Arbeitsplatzrechner (24) mit einem Schnittstellenmodul (1), wobei das Schnittstellenmodul (1) eine Abschirmleiterplatte (2) aufweist, die zur Kopplung einer Rechnerhauptplatine (4) des Computers (5) mit Bedienelementen (12, 13) und/oder externen Schnittstellen (16, 17, 18, 19) vorgesehen ist und die von einem Abschirmgehäuse (6) umgeben ist, wobei die Rechnerhauptplatine (4) in einem Monitor integriert ist, wobei das Abschirmgehäuse (6) eine erste Innenzone (7) zur Durchführung eines Kabelbaums (21) vom Schnittstellenmodul (1) zur Rechnerhauptplatine (4) des Computers (5) sowie eine zweite Innenzone (8) zur Aufnahme der Abschirmleiterplatte (2) aufweist, wobei das Schnittstellenmodul (1) als Bedienteil des Computers (5) ausgebildet ist, wobei der Computer (5) als abhörsicherer Rechner ausgebildet ist und wobei das Schnittstellenmodul (1) verschieden stark belasteten EMV-Zonen derart aufweist, dass durch die erste (7) und zweite (8) Innenzone ein Zonenmodell entsteht mit einem extra HF-technisch evakuierten Bedienteil.

2. Computer nach Anspruch 1, wobei die zweite Innenzone (8) zur Kopplung mit einer über die Bedienelemente (12, 13) und/oder die externen Schnittstellen (16, 17, 18, 19) koppelbaren Außenzone (11) vorgesehen ist.

3. Computer nach einem der Ansprüche 1 oder 2, wobei das Schnittstellenmodul als Frontkomponente (1) des Computers (4) ausgebildet ist.

4. Computer nach einem der Ansprüche 1 bis 3, wobei das Abschirmgehäuse (6) eine evakuierte Zone (9) aufweist, in welcher Filterelemente (10) insbesondere zur Filterung von zwischen der ersten Innenzone (7) und der zweiten Innenzone( 8) und/oder der Außenzone (11) über den Kabelbaum (21) übertragenen Signalen angeordnet sind.

5. Computer nach Anspruch 4, wobei die evakuierte Zone (9) im Randbereich mindestens eine EMV-Dichtung (22) zur Abschirmung der evakuierten Zone (9) aufweist.

6. Computer nach einem der vorhergehenden Ansprüche, wobei die Abschirmleiterplatte (2) mindestens eine Signallage (14) aufweist, wobei die Signallage (14) von Schirmlagen (15) zur Abschirmung der Schirmlage (14) gegenüber der ersten Innenzone (7), der zweiten Innenzone (8) und/oder der evakuierten Zone (9) umgeben sind.

7. Computer nach einem der Ansprüche 4 bis 6, wobei die Filterelemente (10) als Filter dritter Ordnung ausgebildet sind.

8. Computer nach einem der Ansprüche 1 bis 7, wobei der Computer (5) als abhörsicherer Rechner gemäß Zonenmodell Zone 1 ausgebildet ist.

9. Computer nach einem der Ansprüche 1 bis 8, wobei der als All-In-One-Arbeitsplatzrechner (24) ausgebildete Computer (5) den Monitor (15) aufweist, in dessen dem Display abgewandten Seite die Rechnerhauptplatine (4) eingebaut ist, und wobei im unteren Bereich des Monitors (15) das Schnittstellenmodul (1) angeordnet ist.

## Claims

1. Computer (5), in particular all-in-one workstation computer (24) with an interface module (1), wherein the interface module has a circuit board shield (2), which is provided for coupling a main circuit board (4) of the computer (5) to operating elements (12, 13) and/or external interfaces (16, 17, 18, 19) and which is surrounded by a shield housing (6), wherein the main circuit board (4) of the computer is integrated in a monitor, wherein the shield housing (6) has a first inner zone (7) for passing a cable harness (21) from the interface module (1) through to the main circuit board (4) of the computer (5) and a second inner zone (8) for receiving the circuit board shield (2), wherein the interface module (1) is embodied as an operating element of the computer (5), wherein the computer (5) is embodied as a bug-proof computer and wherein the interface module (1) has EMC zones subject to loads of varying strength such that a zone model is formed by the first (7) and second (8) inner zone with an operating element which is specifically evacuated in terms of high frequencies.

2. Computer according to claim 1, wherein the second inner zone (8) is provided for coupling with an outer zone (11) which can be coupled via the operating elements (12, 13) and/or the external interfaces (16, 17, 18, 19).

3. Computer according to one of claims 1 or 2, wherein the interface module is embodied as a front component (1) of the computer (4).

4. Computer according to one of claims 1 to 3, wherein the shield housing (6) has an evacuated zone (9), in which filter elements (10) are arranged, in particular for filtering signals transmitted between the first inner zone (7) and the second inner zone (8) and/or the outer zone (11) via the cable harness (21).

5. Computer according to claim 4, wherein the evacuated zone (9) has at least one EMC seal (22) in the edge region for shielding the evacuated zone (9).

6. Computer according to one of the preceding claims, wherein the circuit board shield (2) has at least one signal position (14), wherein the signal position is surrounded by shield positions (15) for shielding the shield position (14) from the first inner zone (7), the second inner zone (8) and/or the evacuated zone (9).

7. Computer according to one of claims 4 to 6, wherein the filter elements (10) are embodied as third order filters.

8. Computer according to one of claims 1 to 7, wherein the computer (5) is embodied as a bug-proof computer according to zone 1 in the zone model.

9. Computer according to one of claims 1 to 8, wherein the computer (5) embodied as an all-in-one workstation computer (24) has the monitor (15), into which the side of the main circuit board (4) of the computer facing away from the display is installed, and wherein the interface module (1) is arranged in the lower region of the monitor (15).

## Revendications

1. Ordinateur (5), notamment ordinateur (24) pour emplacement de travail All-In-One ayant un module (1) d'interface, dans lequel le module (1) d'interface a une plaquette (2) à circuit imprimé de blindage, qui est prévue pour la connexion d'un platine (4) principale de l'ordinateur (5) à des éléments (12, 13) de commande et/ou à des interfaces (16, 17, 18, 19) extérieures et qui est entourée d'un boîtier (6) de blindage, dans lequel la platine (4) principale d'ordinateur est intégrée dans un moniteur, dans lequel le boîtier (6) de blindage a une première zone (7) intérieure pour donner un harnais (21) de câble du module (1) d'interface à la platine (4) principale de l'ordinateur (5), ainsi qu'une deuxième zone intérieure (8) de réception de la plaquette (2) à circuit imprimé de blindage, dans lequel le module (1) d'interface est constitué en partie de commande de l'ordinateur (5), dans lequel l'ordinateur (5) est constitué sous la forme d'un ordinateur sécurisé à l'écoute et dans lequel le module (1) d'interface a diverses zones de compatibilité électromagnétique très chargées de manière à créer, par la première (7) et la deuxième (8) zone intérieure, un modèle de zone ayant une partie de commande sous vide en extra technique HF.

2. Ordinateur suivant la revendication 1, dans lequel la deuxième zone (8) intérieure est prévue pour la connexion avec une zone (11) extérieure pouvant être connectée par les éléments (12, 13) de commande et/ou les interfaces (16, 17, 18, 19) extérieures.

3. Ordinateur suivant l'une des revendications 1 ou 2, dans lequel le module d'interface est constitué en composant (1) avant de l'ordinateur (4).

4. Ordinateur suivant l'une des revendications 1 à 3, dans lequel le boîtier (6) de blindage a une zone (9) sous vide, dans laquelle sont disposés des éléments (10) de filtre, notamment pour le filtrage de signaux transmis par le harnais (21) de câble entre la première zone (7) intérieure et la deuxième zone (8) intérieure ou la zone (11) extérieure.

5. Ordinateur suivant la revendication 4, dans lequel la zone (9) sous vide a dans la partie de bord au moins une étanchéité (22) à compatibilité électromagnétique de blindage de la zone (9) sous vide.

6. Ordinateur suivant l'une des revendications précédentes, dans lequel la plaquette (2) à circuit imprimé de blindage a au moins une couche (14) de signal, dans lequel les couches (14) de signal sont entourées de couches (15) de blindage, pour le blindage de la couche (14) de signal par rapport à la première zone (7) intérieure, la deuxième zone (8) intérieure et/ou la zone (9) sous vide.

7. Ordinateur suivant l'une des revendications 4 à 6, dans lequel les éléments (10) de filtre sont constitués en filtre du troisième ordre.

8. Ordinateur suivant l'une des revendications 1 à 7, dans lequel l'ordinateur (5) est constitué en ordinateur sécurisé à l'écoute suivant le modèle de zone Zone 1.

9. Ordinateur suivant l'une des revendications 1 à 8, dans lequel l'ordinateur (5), constitué en ordinateur (24) à place de travail All-In-One, a le moniteur (15) dans le côté, loin de l'affichage, duquel est insérée la platine (4) principale d'ordinateur, et dans lequel le module (1) d'interface est monté dans la partie inférieure du moniteur (15).
